# EUROPEAN PATENT APPLICATION

(11) **EP 3 951 976 A1**
(43) Date of publication of application: **09.02.2022**
(21) Application number: 20783851.7
(22) Date of filing: 26.03.2020
(51) Int. Cl.: H01M 10/052, H01M 10/0566, H01M 10/058, H01M 2/02

(54) **EXTERIOR FILM FOR LITHIUM-ION BATTERY, LITHIUM-ION BATTERY AND LITHIUM-ION BATTERY STACK**

(30) Priority: 29.03.2019 JP 2019066264; 29.03.2019 JP 2019066265
(71) Applicant: Mitsui Chemicals, Inc., Tokyo 105-7122 (JP)
(72) Inventor: YAMAMOTO, Shinji, Sodegaura-shi, Chiba 299-0265 (JP); SUGIHARA, Yuri, Sodegaura-shi, Chiba 299-0265 (JP)
(74) Representative: J A Kemp LLP
(86) International application number: PCT/JP2020/013795
(87) International publication number: WO 2020/203685

(57) **Abstract**

Provided are an outer packaging film for a lithium-ion batttery, a lithium-ion batttery, and a lithium-ion battery stack. The outer packaging film for a lithium-ion battery has a layered structure that includes a thermal adhesive layer, a metal layer, and a gas barrier layer, wherein the thermal adhesive layer, the metal layer, and the gas barrier layer are arranged in this order, and wherein the layered structure further includes a self-extinguishing layer.

## Description

### Technical Field

The present disclosure relates to an outer packaging film for a lithium-ion battery, a lithium-ion battery, and a lithium-ion battery stack.

### Background Art

Conventionally, lithium-ion batteries have been attracting attention because of their high energy density and high output characteristics. Because of their high energy density and high output characteristics, when an internal short circuit occurs in such lithium-ion batteries, a large current flows, causing rapid heat generation, and in the worst case, lithium may ignite, resulting in a fire.

In order to prevent such problems, cooling systems have been installed outside a battery to suppress heat generation, resulting in an increase in the overall size and weight of the battery.

To address this, Patent Document 1 proposes an electrochemical device in which a predetermined fire extinguishing agent sheet is provided mainly on one or both sides of a separator of an electrode layered body (battery element) in a lithium-ion battery, and in which a fire caused by lithium ignition can be suppressed by initial fire extinguishing while ensuring the downsizing and weight reduction of the entire battery has been proposed.

Patent documents 2 to 4 below disclose a lithium-ion battery in which a battery stack composed of a plurality of batteries each containing a battery element inside an outer packaging film is further housed in a battery container (battery pack), and a fire extinguishing agent is arranged between the above-described battery stack and the battery container or in the battery container itself.
Patent Document 1: Japanese Patent No. 6431147
Patent Document 2: Japanese Patent Application Laid-Open (JP-A) No. 2009-99301
Patent Document 3: JP-ANo. 2009-99305
Patent Document 4: JP-A No. 2009-99322

### SUMMARY OF INVENTION

### Technical Problem

The technique described in Patent Document 1 above is excellent in terms of making a lithium-ion battery smaller and lighter and enabling initial fire extinguishing, yet there is still room for improvement.

A predetermined fire extinguishing agent sheet is arranged inside an electrode layered body, specifically for each separator that is layered, which may reduce the production efficiency of the electrode layered body and in turn a resulting lithium-ion battery.

Since a fire extinguishing agent sheet is arranged inside an electrode layered body, a fire extinguishing agent, such as potassium salt, is in direct contact with the electrolyte, and the possibility of deterioration of battery characteristics, such as a decrease in energy density, cannot be denied.

In techniques described in Patent Documents 2 to 4 above, a fire extinguishing agent is arranged outside a battery stack, and since the agent only acts after an outer packaging film containing a battery element has been damaged, it is difficult to prevent spread of fire inside the battery container. Therefore, for the techniques described in Patent Documents 2 to 4 above, a technique capable of achieving initial fire extinguishing of a lithium-ion battery is needed.

The present disclosure is made in view of such problems of conventional technologies, and an object thereof is to provide an outer packaging film for a lithium-ion battery that can achieve initial fire extinguishing of a lithium-ion battery, has superior production efficiency and handling properties, and can maintain high battery characteristics, and a lithium-ion battery and a lithium-ion battery stack using the same.

### Solution to Problem

In order to achieve the above-described object, the inventor diligently studied to find that the above-described object can be achieved by providing a self-extinguishing layer in an outer packaging film that is used to house a battery element (electrode layered body) of a lithium-ion battery, thereby completing the outer packaging film for a lithium-ion battery of the disclosure.

Means for solving the above-described problems includes the following aspects. The following <1> is the outer packaging film for a lithium-ion battery of a first aspect of the disclosure, and the following <9> is the outer packaging film for a lithium-ion battery of a second aspect of the disclosure.

<1> An outer packaging film for a lithium-ion battery having a layered structure that includes a thermal adhesive layer, a metal layer, and a gas barrier layer, wherein the thermal adhesive layer, the metal layer, and the gas barrier layer are arranged in this order,
   wherein the layered structure further includes a self-extinguishing layer.
<2> The outer packaging film for a lithium-ion battery according to <1>, wherein the self-extinguishing layer has at least one of: a function of trapping radicals involved in combustion, a function of blocking a combustion supporting material, or a function of absorbing heat and diluting a combustion supporting material.
<3> The outer packaging film for a lithium-ion battery according to <1> or <2>, wherein the self-extinguishing layer is arranged between the thermal adhesive layer and the metal layer.
<4> The outer packaging film for a lithium-ion battery according to any one of <1> to <3>, wherein the metal layer is composed of aluminum foil or stainless steel foil.
<5> The outer packaging film for a lithium-ion battery according to any one of <1> to <4>, wherein the layered structure further includes a toughness layer on a side opposite from a side on which the thermal adhesive layer is arranged, relative to the metal layer.
<6> The outer packaging film for a lithium-ion battery according to <5>, wherein the toughness layer contains ultrahigh molecular weight polypropylene.
<7> The outer packaging film for a lithium-ion battery according to any one of <1> to <6>, wherein a thickness of the self-extinguishing layer is from 20 to 1,000 µm.
<8> The outer packaging film for a lithium-ion battery according to any one of <1> to <7>, wherein a melting point of the thermal adhesive layer is from 100 to 170°C.
<9> The outer packaging film for a lithium-ion battery according to any one of <1> to <8>, wherein an empty space where the self-extinguishing layer is not present is provided at an edge portion of the outer packaging film for a lithium-ion battery.
<10> The outer packaging film for a lithium-ion battery according to <9>, wherein the empty space includes a bonded portion.
<11> The outer packaging film for a lithium-ion battery according to <9> or <10>, wherein the empty space includes a bent portion.
<12> A lithium-ion battery comprising the outer packaging film for a lithium-ion battery according to any one of <1> to <11>.
<13> The lithium-ion battery according to <12>, comprising:
   an outer packaging including a battery housing portion and a sealing portion;
   a lithium-ion battery element including a positive electrode, a negative electrode, and a separator, housed in the battery housing portion; and
   an electrolyte solution or an electrolyte housed in the battery housing portion,
   wherein the outer packaging includes the outer packaging film for a lithium-ion battery.
<14> The lithium-ion battery according to <13>, wherein the thermal adhesive layer in the outer packaging film for a lithium-ion battery forms an inner wall of the battery housing portion.
<15> A lithium-ion battery stack comprising the lithium-ion battery according to any one of <12> to <14>.

### Advantageous Effects of Invention

According to the disclosure, by providing a self-extinguishing layer in an outer packaging film used to house a battery element (electrode layered body) of a lithium-ion battery, an outer packaging film for a lithium-ion battery that can achieve initial fire extinguishing of a lithium-ion battery, has superior production efficiency and handling properties, and can maintain high battery characteristics can be provided, and further, a lithium-ion battery and a lithium-ion battery stack using this outer packaging film for a lithium-ion battery can be provided.

### BRIEF DESCRIPTION OF DRAWINGS

Fig. 1 is a partial cutaway perspective view of the lithium-ion battery of a first aspect of the disclosure.
Fig. 2 is a sectional view along line II-II of the battery illustrated in Fig. 1.
Fig. 3 is a partial sectional view of one embodiment of an outer packaging film for the lithium-ion battery of the first aspect of the disclosure, and more specifically, a partial sectional view of an outer packaging film for a lithium-ion battery that constitutes the outer packaging in the lithium-ion battery illustrated in Fig. 2.
Fig. 4 is a partial sectional view of one example of a conventional outer packaging film for a lithium-ion battery.
Fig. 5 is a partial cutaway perspective view of one embodiment of the lithium-ion battery of a second aspect of the disclosure.
Fig. 6 is a sectional view along line II-II of the battery illustrated in Fig. 5.
Fig. 7 is a sectional view of one embodiment of an outer packaging film for a lithium-ion battery of the second aspect of the disclosure.

### DESCRIPTION OF EMBODIMENTS

Herein, the numerical range expressed by using "from A to B" means a range including numerical values A and B as a lower limit value and an upper limit value.

Herein, the amount of each component in a composition means the total amount of the plurality of substances present in the composition, unless otherwise specified, when there is more than one substance corresponding to each component in the composition.

A first aspect and a second aspect of the disclosure will be described sequentially below.

The outer packaging film for a lithium-ion battery of the second aspect is an outer packaging film for a lithium-ion battery in which the outer packaging film for a lithium-ion battery of the first aspect is limited to an aspect in which an empty space in which the self-extinguishing layer is not present is provided at an edge portion of the outer packaging film for a lithium-ion battery.

### [First Aspect]

The outer packaging film for a lithium-ion battery of the first aspect (hereinafter, also simply referred to as the "outer packaging film of the first aspect") is an outer packaging film for a lithium-ion battery that includes a thermal adhesive layer, a metal layer, and a gas barrier layer, and has a layered structure in which the thermal adhesive layer, the metal layer, and the gas barrier layer are arranged in the order mentioned, wherein the layered structure further includes a self-extinguishing layer.

According to the outer packaging film of the first aspect, initial fire extinguishing of a lithium-ion battery can be realized, and high battery characteristics can be maintained with superior production efficiency or handling properties.

In detail, the outer packaging film of the first aspect includes a self-extinguishing layer in the layered structure, which enables initial fire extinguishing of a lithium-ion battery when used as the outer packaging of a lithium-ion battery.

The outer packaging film of the first aspect has a simple structure in which the layered structure includes a self-extinguishing layer, and thus has superior production efficiency.

Since the outer packaging film of the first aspect is in the form of a film, the film has superior handling properties.

Since the outer packaging film of the first aspect includes a metal layer and a gas barrier layer, the film can suppress penetration of water vapor or the like into a lithium-ion battery when the film is used as the outer packaging of the lithium-ion battery. As a result, the high battery characteristics of the lithium-ion battery element can be maintained.

According to the outer packaging film of the first aspect, not only can initial fire extinguishing of a lithium-ion battery be realized, but also an effect of suppressing ignition itself of a lithium-ion battery can be obtained.

The self-extinguishing layer preferably has at least one of a function of trapping radicals involved in combustion (hereinafter, also referred to as "radical trapping function"), a function of blocking combustion supporting materials (hereinafter, also referred to as "combustion supporting material blocking function"), and a function of absorbing heat and diluting combustion supporting materials (hereinafter, also referred to as "heat absorption and dilution function").

In cases in which the self-extinguishing layer has at least one of the above-described functions, even when a fire occurs in the lithium-ion battery, the fire is extinguished in an extremely short time, and catching fires or spreading fires are effectively suppressed, and therefore initial fire extinguishing of the lithium-ion battery can be more effectively achieved.

When the self-extinguishing layer has at least one of the above-described functions, an effect of suppressing ignition itself before catching fire can also be obtained in a lithium-ion battery.

The above-described radical trapping function preferably traps O radicals, H radicals, and OH radicals, which are chain carriers in a chain reaction of combustion.

The above-described combustion supporting material blocking function is preferably a function to block supply of combustion supporting material to a combustion field.

The above-described heat absorption and dilution function is preferably a function of cooling a combustion field by an endothermic reaction (such as melting, sublimation, or decomposition) and diluting a combustion supporting material (such as oxygen or oxygen supply) and/or a combustible (such as a combustible gas) by generating a gas (such as a non-combustible gas or a flame-retardant gas) and/or an aerosol.

The layered structure in the outer packaging film of the first aspect may include only one self-extinguishing layer or may include two or more self-extinguishing layers.

When the layered structure includes two or more self-extinguishing layers, the two or more self-extinguishing layers may be adjacent to each other (or layered) or may not be adjacent to each other.

The self-extinguishing layer is preferably arranged between the thermal adhesive layer and the metal layer.

When the self-extinguishing layer is arranged between the thermal adhesive layer and the metal layer, an influence of the self-extinguishing layer on a lithium-ion battery element (for example, an influence due to elution of components of the self-extinguishing layer into the electrolyte of the lithium-ion battery) can be further reduced, and therefore higher battery characteristics can be maintained. S

The metal layer is preferably composed of aluminum foil or stainless steel foil.

When the metal layer is composed of aluminum foil or stainless steel foil, the outer packaging film for a lithium-ion battery can better suppress penetration of water vapor into the interior of a lithium-ion battery, and therefore higher battery characteristics can be maintained.

The layered structure may further includes a toughness layer on a side opposite from a side on which the thermal adhesive layer is arranged, relative to the metal layer.

When the layered structure further includes a toughness layer, a damage of a lithium-ion battery element due to an external stress is more effectively suppressed.

When the layered structure further includes a toughness layer, the positional relationship between the toughness layer and the gas barrier layer is not particularly restricted.

In other words, when the layered structure further includes a toughness layer, the layered structure may be a layered structure in which the thermal adhesive layer, the metal layer, the gas barrier layer, and the toughness layer are arranged in the order mentioned, or a layered structure in which the thermal adhesive layer, the metal layer, the toughness layer, and the gas barrier layer are arranged in the order mentioned.

The toughness layer preferably contains ultra-high molecular weight polypropylene. This more effectively suppresses damage to a lithium-ion battery element due to an external stress.

The outer packaging film of the first aspect may satisfy at least one of the requirements described in the section of the second aspect described below. For effects of the requirements, the section on the second aspect can be referred to as appropriate.

For example, the thickness of the self-extinguishing layer (when a plurality of self-extinguishing layers are layered, the thickness of one self-extinguishing layer among the plurality of self-extinguishing layers) may be from 20 to 1,000 µm.

The melting point of the thermal adhesive layer may be from 100 to 170°C.

An empty space where the self-extinguishing layer is not present may be provided at an edge portion of the outer packaging film for a lithium-ion battery.

The above-described empty space may include a bonded portion.

The above-described empty space may include a bent portion.

The lithium-ion battery of the first aspect of the disclosure includes the outer packaging film of the first aspect.

Since the lithium-ion battery of the first aspect includes the outer packaging film of the first aspect, the battery has the same effect as that obtained by the outer packaging film of the first aspect.

A preferable aspect of the lithium-ion battery of the first aspect is a lithium-ion battery that includes:
an outer packaging including a battery housing portion and a sealing portion;
a lithium-ion battery element including a positive electrode, a negative electrode, and a separator housed in the battery housing portion; and
an electrolyte solution or an electrolyte housed in the battery housing portion, wherein
the outer packaging includes the outer packaging film of the first aspect.

In the lithium-ion battery of the preferable aspect, the outer packaging includes the outer packaging film of the first aspect, and therefore, the battery has the same effect as that of the outer packaging film of the first aspect.

A more preferable aspect of the lithium-ion battery of the first aspect is that the thermal adhesive layer in an outer packaging film for a lithium-ion battery forms an inner wall of the battery housing portion.

In this more preferable aspect, since the self-extinguishing layer does not come into contact with the lithium-ion battery element, an influence of the self-extinguishing layer on the lithium-ion battery (for example, an influence caused by elution of components of the self-extinguishing layer into the electrolyte solution) can be further reduced, and as a result, higher battery characteristics can be maintained.

The lithium-ion battery stack of the first aspect includes the lithium-ion battery of the first aspect.

The lithium-ion battery stack of the first aspect includes the lithium-ion battery of the first aspect, and therefore, the stack has the same effect as that of the lithium-ion battery of the first aspect.

The lithium-ion battery stack of the first aspect is a layered body in which a plurality of lithium-ion batteries are layered directly or with other layers in between.

In the lithium-ion battery stack of the first aspect, at least one of the plurality of lithium-ion batteries may be a lithium-ion battery of the first aspect, and it is preferable that two or more of the plurality of lithium-ion batteries are lithium-ion batteries of the first aspect, and it is particularly preferable that all of the plurality of lithium-ion batteries are lithium-ion batteries of the first aspect.

In the lithium-ion battery stack of the first aspect, the plurality of lithium-ion batteries may include both a lithium-ion battery of the first aspect and a lithium-ion battery of the second aspect.

The lithium-ion battery stack of the first aspect may be housed in a battery container together with a protection circuit or the like, if necessary, and used as a battery pack.

Embodiments in the first aspect will be described in detail below.

As a general rule, elements or members that perform substantially the same function will be marked with the same sign and the explanation thereof will be omitted.

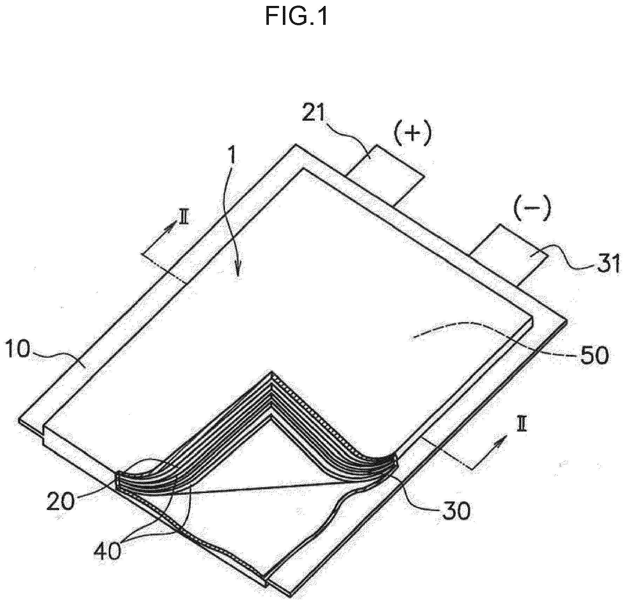

Fig. 1 is a partial cutaway perspective view of the lithium-ion battery of the first aspect.

As illustrated in Fig. 1, a lithium-ion battery 1, an embodiment of the lithium-ion battery of the first aspect, is formed by housing a battery element 50 as a lithium-ion battery element in an outer packaging 10 obtained by drawing an embodiment of the outer packaging film of the first aspect.

The battery element 50 is formed by layering or winding together a positive electrode 20, a negative electrode 30, and a separator 40.

The battery element 50 is housed in the outer packaging 10 with a positive electrode terminal 21 and a negative electrode terminal 31 drawn out from a predetermined edge portion of the outer packaging 10 (see Fig. 1).

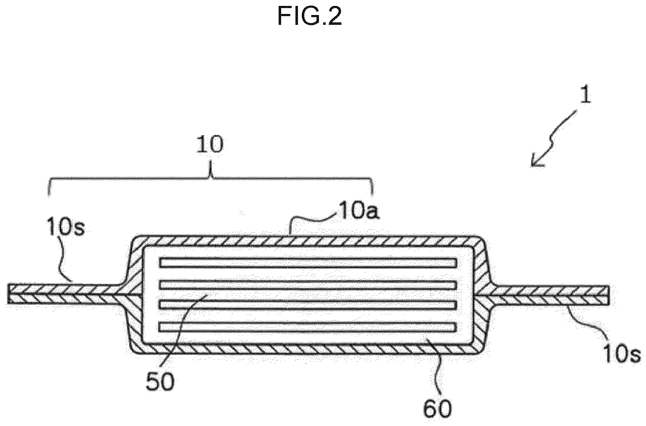

Fig. 2 is a sectional view along line II-II of the lithium-ion battery 1 illustrated in Fig. 1.

As illustrated in Fig. 2, the outer packaging 10 in the lithium-ion battery 1 includes a battery housing portion 10a that extends from a central portion to an edge portion, and a sealing portion 10s that is an edge portion.

The battery housing portion 10a of the outer packaging 10 is a drawn portion formed by drawing the central portion of the outer packaging film for a lithium-ion battery in the embodiment.

The outer packaging 10 is obtained by overlapping two sheets of outer packaging films for a lithium-ion battery in which a drawn portion (or the battery housing portion 10a) is formed, and heat-sealing edge portions of these films together to form a sealing portion 10s. The concept of "overlapping two layers" herein includes an aspect in which a sheet of film is bent and both sides thereof are overlapped.

In the lithium-ion battery 1, the battery element 50 and the electrolyte solution 60 are housed in the battery housing portion 10a as described above. In this state, the battery element 50 and the electrolyte solution 60 are sealed in the battery housing portion 10a by formation of the sealing portion 10s described above.

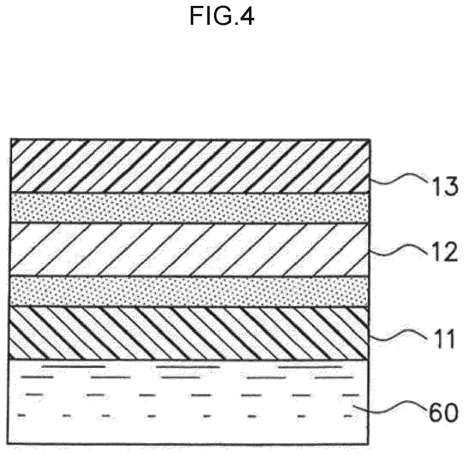

Fig. 4 is a partial sectional view of an example of a conventional outer packaging film for a lithium-ion battery.

As illustrated in this figure, one example of a conventional outer packaging film for a lithium-ion battery has a layered structure in which a thermal adhesive layer 11, a metal layer 12, and a gas barrier layer 13 are layered in the order mentioned via an adhesive layer. In the outer packaging film for a lithium-ion battery of this example, the thermal adhesive layer 11 is in contact with the electrolyte solution 60.

The thermal adhesive layer 11 is utilized for sealing by heat sealing, and it is preferable that the layer has cushioning properties, and it is also preferable that the layer has resistance to electrolyte solution since the layer is in direct contact with the electrolyte solution 60.

A metal layer 12 is layered on the thermal adhesive layer 11 via an adhesive layer. The metal layer 12 is mainly responsible for gas barrier properties and shape retention characteristics, and it is preferable that the adhesive layer is responsible for sealant properties and has electrolyte resistance.

Furthermore, a gas barrier layer 13 is layered on the metal layer 12 via the adhesive layer, and it is preferable that the gas barrier layer not only has a gas barrier function but also has penetration resistance to nails, or the like. The adhesive layer on the metal layer 12 preferably has a water vapor barrier property in addition to an adhesive function.

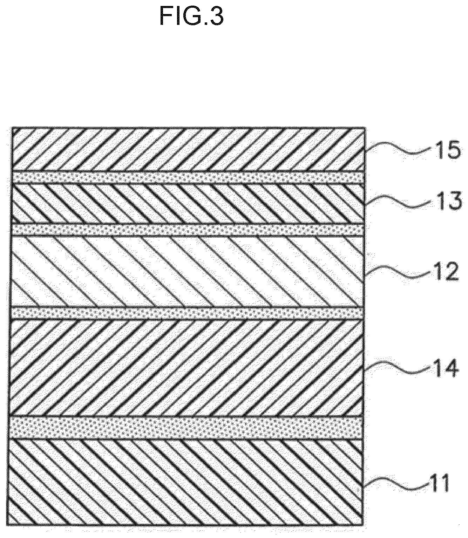

Fig. 3 is a partial sectional view of an embodiment of the outer packaging film for a lithium-ion battery of the first aspect of the disclosure, and more specifically, a partial sectional view of the outer packaging film for a lithium-ion battery that constitutes the outer packaging 10 in the lithium-ion battery 1 illustrated in Fig. 2.

As illustrated in Fig. 3, the outer packaging film of the embodiment that constitutes the outer packaging 10 includes a self-extinguishing layer 14 between the thermal adhesive layer 11 and the metal layer 12 in the layered structure.

In the outer packaging film of the embodiment, the toughness layer 15 is arranged on the side opposite from the side on which the thermal adhesive layer 11 is arranged, relative to the metal layer 12. In Fig. 3, the toughness layer 15 is arranged above the gas barrier layer 13, but the positional relationship between the gas barrier layer 13 and the toughness layer 15 is not limited to the positional relationship illustrated in Fig. 3, and the gas barrier layer 13 and the toughness layer 15 illustrated in Fig. 3 may be exchanged. In other words, the toughness layer 15 may be arranged between the metal layer 12 and the gas barrier layer 13.

Although not illustrated in Fig. 3, in this embodiment, the thermal adhesive layer 11 forms an inner wall of the battery housing portion 10a. As in a conventional example, in this embodiment, the thermal adhesive layer 11 is in contact with the electrolyte solution (not illustrated in Fig. 3).

Here, the self-extinguishing layer 14 is a layer that performs a function capable of effectively extinguishing an initial fire in a lithium-ion battery, and is a layer that exhibits at least one of the above-described radical trapping function, the above-described combustion supporting material blocking function, and the above-described heat absorption and dilution function.

With expression of such functions, when a fire occurs in the lithium-ion battery, the fire is extinguished in a very short time, and catching fires or spreading fires is effectively suppressed.

The expression of the above-described functions also has an effect of suppressing ignition itself of the lithium-ion battery.

In the embodiment, since the self-extinguishing layer 14 is layered on the thermal adhesive layer 11 (or between the thermal adhesive layer 11 and the metal layer 12), the layer does not come into direct contact with the electrolyte solution (not illustrated), and the battery characteristics are not adversely affected by leaching of the components of the self-extinguishing layer 14 into the electrolyte solution, or the like.

The thermal adhesive layer 11 has high adhesive strength.

Furthermore, the respective sp values of polypropylene (PP) and polyethylene (PE), which are representative components of the thermal adhesive layer 11, and propylene carbonate (PC), which is a representative component of the electrolyte solution 60 are 8.0 for PP, 9.3 for PE, and 13.3 for PC. For this reason, the possibility of leaching of PP or PE into PC is very low. Therefore, the possibility of the self-extinguishing layer 14 coming into direct contact with the electrolyte solution 60 is also very low.

In the outer packaging film of the embodiment, the self-extinguishing layer 14 need only be provided in the layered structure of the thermal adhesive layer 11, the metal layer 12, and the gas barrier layer 13, and may, for example, be arranged on the upper side of the gas barrier layer 13 or on the lower side of the thermal adhesive layer 11.

When the self-extinguishing layer 14 is arranged on the gas barrier layer 13, catching fires or spreading fires can be quickly suppressed, and when the self-extinguishing layer 14 is arranged under the thermal adhesive layer 11, internal fires such as fires in the battery element 50 can be significantly suppressed. In such cases, the self-extinguishing layer 14 will come into contact with the electrolyte solution 60, but by selecting the composition and structure of the self-extinguishing layer as described below, the battery characteristics will not be considerably degraded.

In the embodiment, the toughness of the outer packaging 10 is improved because the toughness layer 15 is arranged on the side opposite from the side on which the thermal adhesive layer 11 is arranged, relative to the metal layer 12. As a result, damage to the lithium-ion battery due to external stress is more effectively suppressed.

The lithium-ion battery 1 described above can also be used as at least one of a plurality of lithium-ion batteries in a lithium-ion battery stack.

Next, preferable aspects of elements in the outer packaging film of the first aspect and the lithium-ion battery of the first aspect will be described.

### < Outer Packaging Film >

### (Self-extinguishing Layer)

The self-extinguishing layer (for example, the self-extinguishing layer 14 described above) preferably contains at least one kind of fire extinguishing agent.

The fire extinguishing agent is preferably an agent having at least one of the above-described radical trapping function, the above-described combustion supporting material blocking function, and the above-described heat absorption and dilution function.

More specific examples of a preferable fire extinguishing agent include:
a radical trapping fire extinguishing agent having the above-described radical trapping function;
a combustion supporting material blocking fire extinguishing agent having the above-described combustion supporting material blocking function; and
a heat absorption and dilution fire extinguishing agent having the above-described heat absorption and dilution function.

More specific examples of the above-described combustion supporting material blocking fire extinguishing agents include:
a flame retardant resin fire extinguishing agent that is composed of a flame retardant resin and has a function of covering a combustion field with the flame retardant resin; and
a char-forming fire extinguishing agent that forms a thin film (char) when burned and has a function of covering a combustion field with the formed char.

The above-described fire extinguishing agents may be used in a mixture.

Examples of radical trapping fire extinguishing agents include:
a phosphorus compound such as ammonium dihydrogen phosphate, sodium phosphate, phosphate ester, trimethyl phosphite, red phosphorus, or phosphazene;
an alkali metal compound such as sodium bicarbonate, potassium bicarbonate, potassium oxide, tripotassium citrate, hydrate of sodium carbonate, or hydrate of potassium carbonate;
ammonium sulfate;
a halogen compound such as a bromine compound, a halide modified polymer, or a perhalogenated alkylsulfonic acid;
a hindered amine compound such as a hindered amine or a phenol-added hindered amine; and
an alkyl hydroquinone compound such as butyl hydroquinone.

Examples of the bromine compound include a brominated triazine and a brominated epoxy resin.

Examples of the perhalogenated alkyl sulfonic acid include a perfluoroalkyl sulfonic acid (for example, a perfluoroalkyl sulfonic acid containing a fully fluorinated linear alkyl group).

A radical trapping fire extinguishing agent is preferably used in combination with a fuel and an oxidizing agent. This allows adjustment of the fire extinguishing start temperature (temperature of generation of a potassium radical or the like) depending on the ignition temperature of the fuel, and earlier fire extinguishing is easily achieved.

The compounding ratio of the radical trap extinguishing agent, and the fuel and the oxidizing agent depends on the type of the radical trapping fire extinguishing agent and the fuel, and is preferably from 1 to 10 parts by mass of the total amount of the fuel and the oxidizing agent to 100 parts by mass of the radical trapping fire extinguishing agent. Such a range of the compounding ratio is particularly preferable to achieve both fire extinguishing performance and safety.

The fire extinguishing start temperature of the radical trapping fire extinguishing agent is preferably from 150 to 180°C considering the relationship with the initial fire extinguishing of fires caused by lithium metal.

Examples of the above-described fuels include dicyandiamide, nitroguanidine, guanidine nitrate, urea, melamine, melamine cyanurate, Avicel, guar gum, carboxy methyl cellulose, sodium carboxy methyl cellulose, potassium carboxy methyl cellulose, ammonium carboxy methyl cellulose, nitrocellulose, aluminum, boron, magnesium, magnalium, zirconium, titanium, titanium hydride, tungsten, and silicon.

Among them, a carboxymethyl cellulose-based fuel (for example, carboxymethyl cellulose, sodium carboxymethyl cellulose, potassium carboxymethyl cellulose, or ammonium carboxymethyl cellulose) can be preferably used.

Examples of the above-described oxidizing agents include potassium chlorate, sodium chlorate, strontium chlorate, ammonium chlorate, and magnesium chlorate.

The mixing ratio of the above-described fuel and the above-described oxidizing agent is preferably from 20:80 to 50:50 by mass, depending on the kinds of the fuel and the oxidizing agent and the configuration of a battery.

The fire extinguishing start temperature can be adjusted by mixing the fuel, the oxidizing agent, and the fire extinguishing agent in a ratio described above.

A self-extinguishing layer can be formed by sheet forming and drying while controlling the temperature below the fire extinguishing start temperature.

Examples of a flame retardant resin fire extinguishing agent among the combustion supporting material blocking fire extinguishing agents include a polyphenylene sulfide (PPS) resin, a polyimide (PI) resin, a rubber-based resin (for example, a styrene-butadiene rubber (SBR)).

When the self-extinguishing layer contains a flame retardant resin fire extinguishing agent, a self-extinguishing layer preferably further contains a radical trapping fire extinguishing agent. In this case, the flame retardant resin fire extinguishing agent shuts off supply of a combustion supporting material, and the radical trapping fire extinguishing agent traps a chain carrier of combustion and stops the combustion.

Examples of a char-forming fire extinguishing agent among the combustion supporting material blocking fire extinguishing agents include condensed phosphate ester, silicone powder, zinc borate, organic bentonite, melamine resin (MF), expanded graphite, polycarbonate (PC), and polystyrene carbonate.

Examples of the heat absorption and dilution fire extinguishing agent include:
a hydride such as calcium hydroxide, magnesium hydroxide, and aluminum hydroxide;
an alkali metal compound such as sodium bicarbonate, potassium bicarbonate, potassium oxide, sodium carbonate, and potassium carbonate;
ammonium dihydrogen phosphate; and
urea.

The thickness of the self-extinguishing layer depends on the size of the battery element, the number of layers in the electronic element, and the like, and is preferably from 20 to 1,000 µm. When the thickness of the self-extinguishing layer is from 20 to 1,000 µm, superior fire extinguishing performance can be achieved.

The thickness of the self-extinguishing layer herein means, when a plurality of self-extinguishing layers are layered, the thickness of one self-extinguishing layer among the plurality of self-extinguishing layers.

The self-extinguishing layer can be formed by mixing a fire extinguishing agent with a resin, a fuel, or the like, if necessary, and forming the mixture into a sheet while controlling the temperature below the fire extinguishing start temperature.

In the outer packaging film of the disclosure, it is preferable to arrange the self-extinguishing layer in a position where the layer does not come into direct contact with the electrolyte solution (for example, between the thermal adhesive layer and the metal layer), and it is also possible to form the self-extinguishing layer by kneading or sealing the above-described predetermined fire extinguishing agent into a base material that has low compatibility (reactivity) with the electrolyte solution.

In such cases, the self-extinguishing layer can be arranged in a position where the layer is in direct contact with the electrolyte solution, and the advantages described above can be obtained.

### (Thermal Adhesive Layer)

The thermal adhesive layer (for example, the above-described thermal adhesive layer 11) is preferably a layer formed by at least one kind of thermoplastic resin.

When an outer packaging is produced using the outer packaging film of the disclosure, the outer packaging is produced, for example, by bonding the outer packaging films to each other or the outer packaging films to electrode terminals by heat sealing to form a sealing portion. The thermal adhesive layer contributes to such formation of the sealing portion by heat sealing.

The thermal adhesive layer is preferably arranged on the side closest to a battery element. This can more effectively suppress contact between the self-extinguishing layer and/or the metal layer and the electrolyte.

Examples of the thermoplastic resins include conventional known polyolefin resins.

Examples of olefins used as raw materials for polyolefin resins include ethylene, propylene, 1-butene, 1-pentene, 3-methyl-1-butene, 1-hexene, 4-methyl-1-pentene, and 3-methyl-1-pentene. Among these, polypropylene is preferred from the viewpoint of sealing strength and flexibility of resins to be formed.

The above-described polyolefin resin may be a linear resin or a resin having a branched structure.

The above-described polyolefin resin may be obtained by single polymerization of one olefin or by copolymerization (for example, random copolymerization, block copolymerization, or graft copolymerization) of two or more olefins.

The melting point of the above-described thermoplastic resin is preferably from 100 to 170°C, more preferably from 100 to 135°C, and still more preferably from 100 to 120°C.

When the melting point of the thermoplastic resin is 100°C or higher, peeling of the thermally bonded portion (for example, the sealing portion described below) due to heat generation during charging of a lithium-ion battery is more suppressed.

When the melting point of the thermoplastic resin is 170°C or lower, thermal bonding is more easily performed at or below the fire extinguishing start temperature of a self-extinguishing layer.

As the melting point of the thermoplastic resin, the endothermic peak temperature of the DSC curve measured in the second temperature increase process (iii) can be adopted when about 10 mg of a sample is placed in an aluminum pan and differential scanning calorimetry (DSC) of the following processes (i) to (iii) is performed.
(i) The temperature is raised to 200°C at 100°C/min and held at 200°C for 5 minutes,
(ii) the temperature is lowered to -50°C at 10°C/min, and then
(iii) the temperature is raised to 200°C at 10°C/min.

The thickness of the thermal adhesive layer is preferably from 20 to 50 µm.

When the thickness of the thermal adhesive layer is 20 µm or more, a superior adhesive property can be obtained.

When the thickness of the thermal adhesive layer is 50 µm or less, a superior adhesive maintenance can be obtained.

### (Metal Layer)

The metal layer (for example, the above-described metal layer 11) preferably has a function of preventing water vapor from infiltrating the interior of a lithium-ion battery from the outside.

For example, aluminum foil, stainless steel foil, nickel foil, or the like can be used as the metal layer.

From the viewpoint of the above-described function, the metal layer is preferably aluminum foil or stainless steel foil, and more preferably stainless steel foil.

The thickness of the metal layer is preferably from 15 to 100 µm.

When the thickness of the metal layer is 15 µm or more, a superior pinhole resistance is achieved.

When the thickness of the metal layer is less than 100 µm, a superior bending processability is achieved.

### (Gas Barrier Layer)

The gas barrier layer (for example, the above-described gas barrier layer 13) preferably has a function of preventing pinholes and other defects from occurring in the metal layer.

The material of the gas barrier layer can be, for example, a resin that has chemical resistance, toughness, impact resistance, and flexibility.

For example, an aliphatic polyamide such as nylon 6 or nylon 66 can be used as a resin to form the gas barrier layer.

The thickness of the gas barrier layer is preferably from 20 to 30 µm.

When the thickness of the gas barrier layer is 20 µm or more, a superior gas barrier property is achieved.

When the thickness of the gas barrier layer is 30 µm or less, a superior corrosion resistance is achieved.

### (Toughness Layer)

The toughness layer (for example, the toughness layer 15 described above) is not an essential component of the outer packaging film of the disclosure, and can be provided as necessary.

The toughness layer is preferably formed of a high-toughness resin, which improves the penetration resistance, impact resistance, and the like of an outer packaging film, and more effectively prevents a lithium-ion battery from being damaged by external stress.

When the outer packaging film includes a toughness layer, when a sealing portion is formed by heat sealing, peeling of the sealing portion caused by stress after heat sealing can be more suppressed.

Examples of the above-described high-toughness resin include an ultra-high molecular weight resin having a weight average molecular weight of 500,000 to 6,000,000, and more specifically include polypropylene, a polyethylene terephthalate resin, a polyethylene naphthalate resin, and a polycarbonate resin.

The thickness of the toughness layer depends on the required strength, and is preferably from 10 to 100 µm, and more preferably from 30 to 100 µm.

When the thickness of the toughness layer is 10 µm or more, a superior breakage resistance is achieved.

When the thickness of the toughness layer is less than 100 µm, superior bending processability and shape retention are achieved.

### (Preparation of Outer Packaging Film)

The outer packaging film of the first aspect can be prepared by a conventionally known method such as a dry lamination method, in which layers are layered using an adhesive, a thermal lamination method, in which a molten adhesive is sandwiched between layers, or the like, and the dry lamination method is preferable since the process can be carried out at room temperature.

### < Lithium-ion Battery >

A lithium-ion battery of one embodiment of the first aspect includes the above-described outer packaging film.

A lithium-ion battery of one embodiment of the first aspect further contains: a lithium-ion battery element that includes a positive electrode, a negative electrode, and a separator that insulates the two electrodes; and an electrolyte solution or an electrolyte.

The positive electrode and the negative electrode are respectively connected to the positive electrode terminal and the negative electrode terminal, which are current-carrying, and the tips of these terminals protrude outside the outer packaging film.

### (Positive Electrode)

The positive electrode preferably includes a positive electrode active material and a positive electrode current collector, and may further include a conductive aid, a binder, and a solid electrolyte, and the like, as necessary.

The positive electrode active material is not particularly limited, and any known material can be used. Examples thereof include a lithium-containing composite oxide such as lithium cobaltate, lithium nickelate, lithium manganate, a spinel-type lithium composite oxide, or lithium titanate.

### (Negative Electrode)

The negative electrode preferably includes a negative electrode active material and a negative electrode current collector, and may further include a conductive aid, a binder, and a solid electrolyte, and the like, as necessary.

The negative electrode active material is not particularly limited, and any known material can be used. Examples thereof include a carbon material such as natural graphite, artificial graphite, or hard carbon, silicon (Si), and a silicon alloy.

### (Separator)

As a separator, any known separator can be used without any particular restriction.

Examples of a separator that can be used include: a polymeric nonwoven fabric; a porous polymer film; and a sheet-like member made of heat-resistant fibers containing at least one of polyimide, glass, and ceramics. As a separator, a composite of these members (for example, a layered body obtained by layering these members) can also be used.

The separator preferably includes a porous polyolefin film.

### (Electrolyte Solution or Electrolyte)

The electrolyte solution or the electrolyte is not particularly limited as long as the electrolyte solution or the electrolyte has lithium ion conductivity, and any known one can be used, such as a nonaqueous electrolyte, a gel electrolyte, a polymer electrolyte, or an inorganic solid electrolyte.

Examples of the nonaqueous electrolyte include an electrolyte solution obtained by dissolving an Li electrolyte such as LiPF₆, LiBF₄, LiN(SO₂CF₃)₂, or LiN(SO₂CF₂CF₃)₂ in a mixed solvent of carbonates such as ethylene carbonate, propylene carbonate, dimethyl carbonate, and ethyl methyl carbonate.

Examples of the inorganic solid electrolyte include:
an oxide solid electrolyte such as a perovskite type oxide solid electrolyte such as (Li,La)TiO₃, or a NASICON type oxide solid electrolyte such as Li(Al,Ti)(PO₄)₃; and
a sulfide solid electrolyte such as Li₂S-P₂S₅, Li₂S-SiS₂, LiI-Li₂S-SiS₂, LiI-Si₂S-P₂S₅, LiI-Li₂S-P₂O₅, or LiI-Li₃PO₄-P₂S₅.

The lithium-ion battery of the first aspect can be prepared by a generally known method.

For example, such a lithium-ion battery can be prepared by storing a battery element to which metal electrodes are connected in an outer packaging film, and sealing the periphery portion of the outer packaging film with the electrode terminals protruding to the outside by thermal bonding to seal the battery element.

### [Second Aspect]

The outer packaging film for a lithium-ion battery of the second aspect (hereinafter, also simply referred to as the "outer packaging film of the second aspect") is an outer packaging film for a lithium-ion battery that includes a thermal adhesive layer, a metal layer, and a gas barrier layer, and has a layered structure in which the thermal adhesive layer, the metal layer, and the gas barrier layer are arranged in the order mentioned, wherein the layered structure further includes a self-extinguishing layer, and an empty space where the self-extinguishing layer is not present is provided at an edge portion of the outer packaging film for a lithium-ion battery.

The outer packaging film of the second aspect is the same as the outer packaging film of the first aspect, except that the outer packaging film for a lithium-ion battery is limited to an aspect in which an empty space where the self-extinguishing layer is not present is provided at an edge portion of the film, and a preferable aspect thereof is also the same as that of the first aspect.

For a preferable aspect of the outer packaging film of the second aspect, the sections of the first aspect described above can be referred to as appropriate.

According to the outer packaging film of the second aspect, initial fire extinguishing of a lithium-ion battery can be realized, and high battery characteristics can be maintained with superior production efficiency or handling properties.

In detail, the outer packaging film of the second aspect includes a self-extinguishing layer in the layered structure, which enables initial fire extinguishing of a lithium-ion battery when packaging a lithium-ion battery element.

The outer packaging film of the second aspect has a simple structure in which the layered structure includes a self-extinguishing layer, and thus has superior production efficiency.

Since the outer packaging film of the second aspect is in the form of a film, the film has superior handling properties.

Since the outer packaging film of the second aspect includes a metal layer and a gas barrier layer, the film can suppress penetration of water vapor or the like into a lithium-ion battery element when packaging of the lithium-ion battery element. As a result, the high battery characteristics of the lithium-ion battery element can be maintained.

According to the outer packaging film of the second aspect, not only can initial fire extinguishing of a lithium-ion battery be realized, but also an effect of suppressing ignition of a lithium-ion battery is expected to be obtained.

The layered structure in the outer packaging film of the second aspect may include only one self-extinguishing layer or may include two or more self-extinguishing layers.

When the layered structure includes two or more self-extinguishing layers, the two or more self-extinguishing layers may be adjacent to each other (or layered) or may not be adjacent to each other.

In the outer packaging film of the second aspect, an empty space where the self-extinguishing layer is not present is provided at an edge portion of the outer packaging film for a lithium-ion battery. The edge portion of the outer packaging film for a lithium-ion battery is subjected to processing (for example, bending or bonding) more often than a central portion. By providing an empty space where the self-extinguishing layer is not present at such an edge portion, the processability (for example, bendability or adhesiveness) of the edge portion is improved, which facilitates preparation of a lithium-ion battery using an outer packaging film for a lithium-ion battery.

The empty space (or an area that is provided at an edge portion of an outer packaging film for a lithium-ion battery where no self-extinguishing layer exists) preferably includes a bonded portion.

Here, the bonded portion is an adhesion area with another film (for example, another outer packaging film for a lithium-ion battery) or the like that may be provided at an edge portion of an outer packaging film for a lithium-ion battery.

When the empty space includes a bonded portion, the adhesive processability of the bonded portion of the outer packaging film for a lithium-ion battery is further improved. In particular, when the bonded portion is a thermally bonded portion, a phenomenon in which a self-extinguishing layer exhibits a fire-extinguishing function due to heat during adhesion and a phenomenon in which the thermal adhesiveness decreases due to exhibition of fire extinguishing function are more suppressed.

The melting point of the thermal adhesive layer is preferably from 100 to 170°C, more preferably from 100 to 135°C, and still more preferably from 100 to 120°C.

When the melting point of the thermal adhesive layer is 100°C or higher, peeling of the thermally bonded portion (for example, the sealing portion described below) due to heat generation during charging of a lithium-ion battery is more suppressed.

When the melting point of the thermal adhesive layer is 170°C or lower, thermal bonding is more easily performed at or below the fire extinguishing start temperature of a self-extinguishing layer.

As the melting point of the thermal adhesive layer, the endothermic peak temperature of the DSC curve measured in the second temperature increase process (iii) can be adopted when about 10 mg of a sample is placed in an aluminum pan and differential scanning calorimetry (DSC) of the following processes (i) to (iii) is performed.
(i) The temperature is raised to 200°C at 100°C/min and held at 200°C for 5 minutes,
(ii) the temperature is lowered to -50°C at 10°C/min, and then
(iii) the temperature is raised to 200°C at 10°C/min.

The empty space preferably includes a bent portion.

Here, the bent portion is a portion where an outer packaging film for a lithium-ion battery is bent. One example of a bent portion is a drawn portion as described below.

The thickness of an outer packaging film for a lithium-ion battery at an empty space is thinner than at other locations because the self-extinguishing layer is not present. Therefore, when the empty space includes a bent portion, it is easier to perform bending (for example, drawing) of an outer packaging film for a lithium-ion battery.

The thickness of the self-extinguishing layer is preferably from 20 to 1,000 µm.

When the thickness of the self-extinguishing layer is 20 µm or more, the self-extinguishing performance of the self-extinguishing layer is more effectively exhibited.

When the thickness of the self-extinguishing layer is 1,000 µm or less, it is easier to form an outer packaging film with a self-extinguishing layer.

The thickness of the self-extinguishing layer herein means, when a plurality of self-extinguishing layers are layered, the thickness of one self-extinguishing layer among the plurality of self-extinguishing layers.

The self-extinguishing layer is preferably arranged between the thermal adhesive layer and the metal layer.

When the self-extinguishing layer is arranged between the thermal adhesive layer and the metal layer, an effect of the self-extinguishing layer on a lithium-ion battery (for example, an effect due to elution of components of the self-extinguishing layer into the electrolyte of the lithium-ion battery) can be further reduced, and therefore higher battery characteristics can be maintained.

The layered structure may further include a toughness layer on the side opposite from the side on which the thermal adhesive layer is arranged, relative to the metal layer.

When the layered structure further includes a toughness layer, a damage of a lithium-ion battery element due to an external stress is more effectively suppressed.

When the layered structure further includes a toughness layer, the positional relationship between the toughness layer and the gas barrier layer is not particularly restricted.

In other words, when the layered structure further includes a toughness layer, the layered structure may be a layered structure in which the thermal adhesive layer, the metal layer, the gas barrier layer, and the toughness layer are arranged in the order mentioned, or a layered structure in which the thermal adhesive layer, the metal layer, the toughness layer, and the gas barrier layer are arranged in the order mentioned.

The lithium-ion battery of the second aspect of the disclosure includes the outer packaging film of the second aspect.

Since the lithium-ion battery of the second aspect includes the outer packaging film of the second aspect, the battery has the same effect as that obtained by the outer packaging film of the second aspect.

A preferable aspect of the lithium-ion battery of the second aspect is a lithium-ion battery that includes:
an outer packaging including a battery housing portion and a sealing portion;
a lithium-ion battery element including a positive electrode, a negative electrode, and a separator, housed in the battery housing portion; and
an electrolyte solution or an electrolyte housed in the battery housing portion, wherein
the outer packaging includes the outer packaging film of the second aspect.

In the lithium-ion battery of the preferable aspect, the outer packaging includes the outer packaging film of the second aspect, and therefore, the battery has the same effect as that of the outer packaging film of the second aspect.

A more preferable aspect of the lithium-ion battery of the second aspect is that the thermal adhesive layer in an outer packaging film for a lithium-ion battery forms an inner wall of the battery housing portion.

In this more preferable aspect, since the self-extinguishing layer does not come into contact with the lithium-ion battery element, an effect of the self-extinguishing layer on the lithium-ion battery (for example, an effect caused by elution of components of the self-extinguishing layer into the electrolyte solution) can be further reduced, and as a result, higher battery characteristics can be maintained.

The lithium-ion battery stack of the second aspect includes the lithium-ion battery of the second aspect.

The lithium-ion battery stack of the second aspect includes the lithium-ion battery of the second aspect, and therefore, the stack has the same effect as that of the lithium-ion battery of the second aspect.

The lithium-ion battery stack of the second aspect is a layered body in which a plurality of lithium-ion batteries are layered directly or with other layers in between.

In the lithium-ion battery stack of the second aspect, at least one of the plurality of lithium-ion batteries may be a lithium-ion battery of the second aspect, and it is preferable that two or more of the plurality of lithium-ion batteries are lithium-ion batteries of the second aspect, and it is particularly preferable that all of the plurality of lithium-ion batteries are lithium-ion batteries of the second aspect.

In the lithium-ion battery stack of the second aspect, the plurality of lithium-ion batteries may include both a lithium-ion battery of the second aspect and a lithium-ion battery of the first aspect.

The lithium-ion battery stack of the second aspect may be housed in a battery container together with a protection circuit or the like, if necessary, and used as a battery pack.

### Embodiments in the second aspect will be described in detail below.

As a general rule, elements or members that perform substantially the same function will be marked with the same sign and the explanation thereof will be omitted

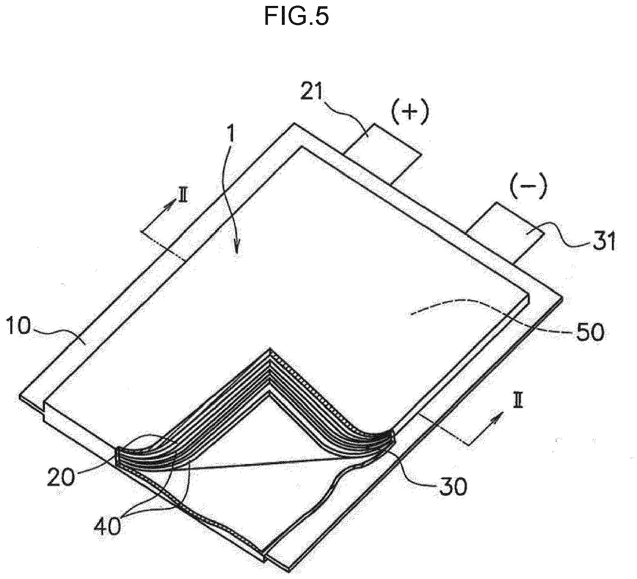

Fig. 5 is a partial cutaway perspective view of the lithium-ion battery of the second aspect.

As illustrated in Fig. 5, a lithium-ion battery 1, an embodiment of the lithium-ion battery of the second aspect, is formed by housing a battery element 50 as a lithium-ion battery element in an outer packaging 10 obtained by drawing an embodiment of the outer packaging film for a lithium-ion battery of the second aspect.

The battery element 50 is formed by layering or winding together a positive electrode 20, a negative electrode 30, and a separator 40.

The battery element 50 is housed in the outer packaging 10 with a positive electrode terminal 21 and a negative electrode terminal 31 drawn out from a predetermined edge portion of the outer packaging 10 (see Fig. 5).

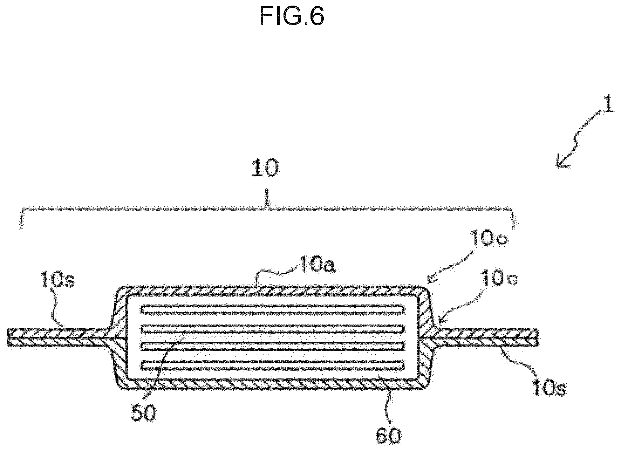

Fig. 6 is a sectional view along line II-II of the lithium-ion battery 1 illustrated in Fig. 5.

As illustrated in Fig. 6, the outer packaging 10 in the lithium-ion battery 1 includes a battery housing portion 10a that is a central portion, and a bent portion 10c and a sealing portion 10s that are an edge portion.

The battery housing portion 10a and the bent portion 10c of the outer packaging 10 is a drawn portion formed by drawing the outer packaging film for a lithium-ion battery of one embodiment of the second aspect.

The outer packaging 10 is obtained by overlapping two sheets of outer packaging films for a lithium-ion battery in which a drawn portion (or the battery housing portion 10a and the bent portion 10c) is formed, and heat-sealing edge portions of these films together to form a sealing portion 10s. The concept of "overlapping two layers" herein includes an aspect in which a sheet of film is bent and both sides thereof are overlapped.

In the lithium-ion battery 1, the battery element 50 and the electrolyte solution 60 are housed in the battery housing portion 10a as described above. In this state, the battery element 50 and the electrolyte solution 60 are sealed in the battery housing portion 10a by formation of the sealing portion 10s described above.

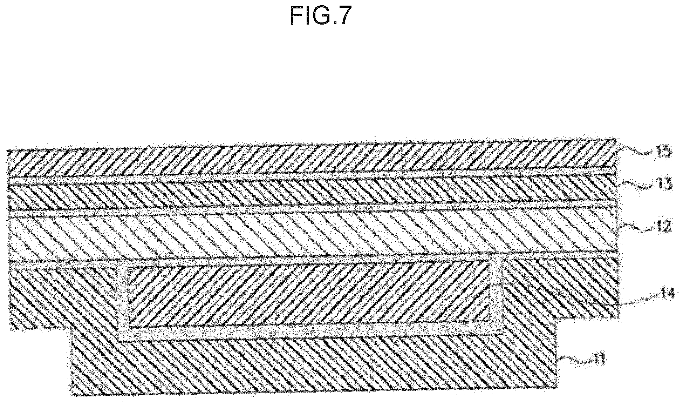

Fig. 7 is a sectional view of one embodiment of the outer packaging film for a lithium-ion battery of the invention, and more specifically, a sectional view of the outer packaging film for a lithium-ion battery before the above-described drawing is applied.

As illustrated in Fig. 7, the outer packaging film for a lithium-ion battery (hereinafter, also simply referred to as "outer packaging film") of the embodiment includes a thermal adhesive layer 11, a metal layer 12, and a gas barrier layer 13, and has a layered structure in which the thermal adhesive layer 11, the metal layer 12, and the gas barrier layer 13 are arranged in the order mentioned. The outer packaging film further includes a self-extinguishing layer 14 between the thermal adhesive layer 11 and the metal layer 12. However, an empty space where the self-extinguishing layer 14 is not present is provided at an edge portion of the outer packaging film.

In the outer packaging film of the embodiment, the toughness layer 15 is arranged on the side opposite from the side on which the thermal adhesive layer 11 is arranged, relative to the metal layer 12. In Fig. 7, the toughness layer 15 is arranged above the gas barrier layer 13, but the positional relationship between the gas barrier layer 13 and the toughness layer 15 is not limited to the positional relationship illustrated in Fig. 7, and the gas barrier layer 13 and the toughness layer 15 illustrated in Fig. 7 may be exchanged. In other words, the toughness layer 15 may be arranged between the metal layer 12 and the gas barrier layer 13.

Although not illustrated in Fig. 7, in this embodiment, the thermal adhesive layer 11 forms an inner wall of the battery housing portion 10a. Also in this embodiment, the thermal adhesive layer 11 is in contact with the electrolyte solution (not illustrated in Fig. 7).

Here, the thermal adhesive layer 11 is utilized for sealing by heat sealing.

It is preferable that the thermal adhesive layer 11 has cushioning properties, and it is also preferable that the layer has resistance to electrolyte solution since the layer is in direct contact with the electrolyte solution 60.

A metal layer 12 is layered on the thermal adhesive layer 11 via an adhesive layer. The metal layer 12 is mainly responsible for gas barrier properties and shape retention characteristics, and it is preferable that the adhesive layer is responsible for sealant properties and has electrolyte resistance.

Furthermore, a gas barrier layer 13 is layered on the metal layer 12 via the adhesive layer, and it is preferable that the gas barrier layer not only has a gas barrier function but also has penetration resistance to nails, or the like. The adhesive layer on the metal layer 12 preferably has a water vapor barrier property in addition to an adhesive function.

In the embodiment, the self-extinguishing layer 14 is a layer that performs at least one of: the radical trapping function described in the section of the first aspect, the combustion supporting material blocking function described in the section of the first aspect, and the heat absorption and dilution function described in the section of the first aspect.

With expression of such functions, when a fire occurs in the lithium-ion battery, the fire is extinguished in a very short time, and catching fires or spreading fires is effectively suppressed.

The expression of the above-described functions also has an effect of suppressing ignition itself of the lithium-ion battery.

In the embodiment, since the self-extinguishing layer 14 is layered on the thermal adhesive layer 11 (or between the thermal adhesive layer 11 and the metal layer 12), the layer does not come into direct contact with the electrolyte solution (not illustrated), and the battery characteristics are not adversely affected by leaching of the components of the self-extinguishing layer 14 into the electrolyte solution, or the like.

The thermal adhesive layer 11 has high adhesive strength.

Furthermore, the respective sp values of polypropylene (PP) and polyethylene (PE), which are representative components of the thermal adhesive layer 11, and propylene carbonate (PC), which is a representative component of the electrolyte solution 60 are 8.0 for PP, 9.3 for PE, and 13.3 for PC. For this reason, the possibility of leaching of PP or PE into PC is very low. Therefore, the possibility of the self-extinguishing layer 14 coming into direct contact with the electrolyte solution 60 is also very low.

In the outer packaging film of the embodiment, the self-extinguishing layer 14 need only be provided in the layered structure of the thermal adhesive layer 11, the metal layer 12, and the gas barrier layer 13, and may, for example, be arranged on the upper side of the gas barrier layer 13 or on the lower side of the thermal adhesive layer 11.

When the self-extinguishing layer 14 is arranged on the gas barrier layer 13, catching fires or spreading fires can be quickly suppressed, and when the self-extinguishing layer 14 is arranged under the thermal adhesive layer 11, internal fires such as fires in the battery element 50 can be significantly suppressed. In such cases, the self-extinguishing layer 14 will come into contact with the electrolyte solution 50, but by selecting the composition and structure of the self-extinguishing layer as described below, the battery characteristics will not be considerably degraded.

In the embodiment, the toughness of the outer packaging 10 is improved because the toughness layer 15 is arranged on the side opposite from the side on which the thermal adhesive layer 11 is arranged, relative to the metal layer 12. As a result, damage to the lithium-ion battery due to external stress is more effectively suppressed.

An empty space where the self-extinguishing layer 14 is not present is provided at an edge portion of the outer packaging film of the embodiment.

In the outer packaging 10 (Fig. 6) obtained by drawing an outer packaging film, the above-described empty space (or a portion where the self-extinguishing layer 14 does not exist; or an edge portion of the outer packaging film) corresponds to the bent portion 10c and the sealing portion 10s.

The overall thickness at the empty space is thinner than that at the central portion due to the absence of the self-extinguishing layer 14. Therefore, when an outer packaging film is drawn to form the outer packaging 10, the bendability is improved by bending the above-described empty space.

The empty space also has excellent heat-sealing property for forming the sealing portion 10s since the self-extinguishing layer 14 is absent. In other words, since the self-extinguishing layer 14 is absent in the empty space, when the empty space is heat-sealed, heat of heat-sealing further suppresses occurrence of unintended fire-extinguishing function (or fire-extinguishing function by the self-extinguishing layer 14). Therefore, an influence of the unintended fire-extinguishing function on the heat-sealing property is further suppressed.

As described above, the empty space (or a portion where the self-extinguishing layer 14 does not exist; or an edge portion of the outer packaging film) contributes to the bendability and heat-sealability of the outer packaging film, which in turn contributes to the ease of preparation of a lithium-ion battery.

The lithium-ion battery 1 described above can also be used as at least one of a plurality of lithium-ion batteries in a lithium-ion battery stack.

Preferable aspects of elements in the outer packaging film of the second aspect and the lithium-ion battery of the second aspect are the same as the preferable aspects of elements in the outer packaging film of the first aspect and the lithium-ion battery of the first aspect, respectively. For these, the section of the first aspect can be referred to as appropriate.

The lithium-ion battery of the second aspect can be prepared by a generally known method.

For example, such a lithium-ion battery can be prepared by storing a battery element to which metal electrodes are connected in an outer packaging film, and sealing the periphery portion of the outer packaging film with the electrode terminals protruding to the outside by thermal bonding to seal the battery element.

### EXAMPLES

Examples of the disclosure will be described below, but the disclosure is not limited to the following Examples.

The following Examples 1 to 3 and Comparative Example 1 are examples and a comparative example of the first aspect, and Examples 101 to 103 are examples of the second aspect.

### [Examples 1 to 3 and Comparative Example 1]

### (Preparation of Layered Battery Element)

A layered battery element corresponding to the battery element 50 in Fig. 1 and Fig. 2 was prepared. The details are described below.

A slurry for a negative electrode was prepared by mixing natural graphite (97 parts by mass) as a negative electrode active material, styrene-butadiene rubber (SBR) (2 parts by mass) as a binder, carboxymethyl cellulose (CMC) (1 part by mass) as a thickener, and water (100 parts by mass) as a solvent.

Next, a 10 µm thick copper foil was used as a negative electrode current collector, and the above-described slurry for negative electrode was coated on the negative electrode current collector in such a manner that the coating weight after drying was 9 mg/cm² on one side and 18 mg/cm² on both sides, and then dried to prepare a negative electrode.

This negative electrode was roll pressed to achieve a pressing density of 1.5 g/cm³.

NCM523 (or LiNi_{0.5}Co_{0.2}Mn_{0.3}O₂) (94 parts by mass) as a positive electrode active material, polyvinylidene fluoride (PVDF) (N-methyl-2-pyrrolidone (NMP) dispersion with a solid content of 8% by mass) (37.5 parts by mass) as a binder, acetylene black (3 parts by mass) as a conductive aid, and NMP (32.2 parts by mass) as a solvent were mixed to prepare a slurry for a positive electrode.

Next, a 20 µm thick aluminum foil was used as a positive electrode current collector, and the above-described slurry for positive electrode was applied to the positive electrode current collector in such a manner that the coating weight after drying was 16.0 mg/cm² on one side and 32.0 mg/cm² on both sides, and then dried to prepare a positive electrode.

This positive electrode was roll pressed to achieve a pressing density of 3.2 g/cm³.

The roll-pressed positive electrode is punched into a rectangle of 60 mm × 50 mm, and the roll-pressed negative electrode is punched into a rectangle of 62 mm × 52 mm.

Next, a slurry coating film on a 60 mm × 10 mm area at one end of the long side of the above-described punched positive electrode was peeled off, leaving a 60 mm × 40 mm slurry coating film, and a positive electrode terminal was attached to this peeled off area to obtain a positive electrode with a positive electrode terminal.

Similarly, a slurry coating film on a 62 mm × 10 mm area at one end of the long side of the above-described punched negative electrode was peeled off, leaving a 62 mm × 42 mm slurry coating film, and a negative electrode terminal was attached to this peeled off area to obtain a negative electrode with a negative electrode terminal.

The above-described positive electrode with a positive electrode terminal was prepared in 9 pieces, and the above-described negative electrode with a negative electrode terminal was prepared in 10 pieces.

The above-described negative electrode with a negative electrode terminal and the above-described positive electrode with a positive electrode terminal were alternately layered with a polyethylene separator (porosity: 50%) in between, to obtain a layered battery element composed of 10 negative electrodes with negative electrode terminals, 9 positive electrodes with positive electrode terminals, and 18 separators. The layered structure in the layered battery element was represented as "negative electrode with negative electrode terminal/separator/positive electrode with positive electrode terminal/separator/negative electrode with negative electrode terminal/separator.../negative electrode with negative electrode terminal" (the outermost layers on both sides were both negative electrodes with negative electrode terminals). The positive electrode terminal and the negative electrode terminal were placed on the same side of the layered battery element.

As described above, a layered battery element corresponding to the battery element 50 in Fig. 1 and Fig. 2 was obtained.

### (Preparation of Nonaqueous Electrolyte)

A nonaqueous electrolyte solution corresponding to the electrolyte solution 60 in Fig. 2 was prepared. The details are described below.

A mixture of ethylene carbonate (EC) (35% by volume), dimethyl carbonate (DMC) (35% by volume), and ethyl methyl carbonate (EMC) (30% by volume) was used as a solvent, and 1 mol/L of LiPF₆ was added to the mixture to prepare the nonaqueous electrolyte solution.

### (Preparation of Outer Packaging Film)

An outer packaging film having the same structure as that of the outer packaging film illustrated in Fig. 3 except that the toughness layer 15 was omitted was prepared.

Specifically, a thermal adhesive layer (thermal adhesive layer 11 in Fig. 3), a self-extinguishing layer (self-extinguishing layer 14 in Fig. 3), a metal layer (metal layer 12 in Fig. 3), and a gas barrier layer (gas barrier layer 13 in Fig. 3) were bonded together in the order mentioned via an adhesive layer (polyethylene adhesive polymer, 2 µm thick) to obtain an outer packaging film.

Here, ultrahigh molecular weight PP having a weight average molecular weight of 100,000 (20 µm thick) was used as the thermal adhesive layer (thermal adhesive layer 11 in Fig. 3), aluminum foil (40 µm thick) was used as the metal layer (metal layer 12 in Fig. 3), and nylon 12 having a weight average molecular weight of 1,500,000 (25 µm thick) was used as the gas barrier layer (gas barrier layer 13 in Fig. 3).

The constituent materials and thickness of the self-extinguishing layer (self-extinguishing layer 14 in Fig. 3) were as shown in Table 1.

In Example 1, a film made of polyphenylene sulfide (PPS) having a weight average molecular weight of 40,000 was produced by extrusion molding, and the resulting film was used as the self-extinguishing layer.

In Example 2, a film made of polyolefin to which a phosphoric acid-based fire extinguishing agent was added was produced by extrusion molding, and the resulting film was used as the self-extinguishing layer. Condensed phosphate was used as the phosphoric acid-based fire extinguishing agent, and polypropylene (E200GP manufactured by Prime Polymer Co., Ltd.) having a weight average molecular weight of 100,000 was used as the above-described polyolefin.

In Example 3, potassium oxide particles having a particle diameter of about 0.2 µm were used as the potassium-based fire extinguishing agent, and after casting the potassium oxide particles, a sheet-like molded body was produced by press molding, and the resulting molded body was used as the self-extinguishing layer.

### (Preparation of Lithium-ion Battery)

Each of the above-described outer packaging films was subjected to a drawing process as illustrated in Fig. 2 to form a battery housing portion (battery housing portion 10a in Fig. 2). This drawing process was performed in such a manner that the thermal adhesive layer (thermal adhesive layer 11 in Fig. 3) side of the outer packaging film was on the inside and the gas barrier layer (gas barrier layer 13 in Fig. 3) was on the outside.

Two sheets of the above-described drawn outer packaging film were prepared.

Next, the above-described layered battery element corresponding to the battery element 50 was arranged in the battery housing portion of the two above-described drawn outer packaging films, the edge portions of the two outer packaging films were overlapped with each other, and the three sides of these outer packaging films were heat-sealed at 150°C to form a sealing portion (see Fig. 2). This resulted in an outer packaging that housed the layered battery element and whose one side was open. At this time, the layered battery elements were arranged in such a manner that the positive electrode terminal and the negative electrode terminal were pulled out from the open side of the outer packaging (see Fig. 1).

Next, the above-described nonaqueous electrolyte solution was injected into the outer packaging that was open on one side, and then the opening of the packaging was heat-sealed at 150°C to seal the packaging.

As described above, the lithium-ion batteries of Examples 1 to 3 and Comparative Example 1 were obtained.

### (Evaluation Test)

Needle penetration tests were conducted on the lithium-ion batteries of Examples 1 to 3.

The results are shown in Table 1.

**[Table 1]**

| | Self-extinguishing layer | | Results of nail penetration test |
|---|---|---|---|
| | Constituent materials | Thickness | |
| Example 1 | Polyphenylene sulfide | 100 µm | Only steam was generated, and neither smoke nor ignition occurred. |
| Example 2 | Polyolefin with phosphoric acid-based fire extinguishing agent added | 50 µm | Only steam was generated, and neither smoke nor ignition occurred. |
| Example 3 | Potassium-based fire extinguishing agent | 500 µm | Smoke was generated, but no ignition occurred. |
| Comparative Example 1 | (No self-extinguishing layer) | - | Ignition occurred. |

As shown in Table 1, in Examples 1 and 2, only vapor was generated and neither smoke nor ignition occurred. In Example 3, there was fuming, but the self-extinguishing layer generated aerosol, and did not ignite. From the above results, it can be expected that Examples 1 to 3 can realize initial fire extinguishing of a lithium-ion battery.

In contrast to these Examples 1 to 3, Comparative Example 1, which did not include a self-extinguishing layer, ignition occurred. Based on this result, Comparative Example 1 is not expected to realize initial fire extinguishing of a lithium-ion battery.

### [Example 101]

### (Preparation of Self-extinguishing Layer Film)

A resin (isotactic polypropylene: i-PP) to be a base material was fed into a biaxial kneading machine manufactured by Kobe Steel Ltd. (HYPERKTX 30MX), melted and kneaded at a predetermined temperature and rotation speed in the primary mixing zone, and then, in the secondary mixing zone adjusted at the fire extinguishing start temperature or lower, a mixture of tripotassium citrate (radical trapping fire extinguishing agent) (150 parts by mass), potassium chlorate (oxidizing agent) (7 parts by mass), and carboxymethyl cellulose (fuel) (3 parts by mass) was added to the mixture in an amount of 5.2% by mass with respect to the total amount of the resulting kneaded product, and the mixture was further kneaded to obtain a kneaded product composed of the resin, the radical trap extinguishing agent, the oxidizing agent, and the fuel.

The resulting kneaded product was pelletized and the resulting pellets were used to produce a uniaxially oriented film having a thickness of 100 µm as a self-extinguishing layer film using a single-screw extruder.

### (Preparation of Outer Packaging Film)

Both sides of 40 µm thick aluminum foil (equivalent to the metal layer 12 in Fig. 7) were subjected to a conversion treatment, and 25 µm thick drawn nylon film (equivalent to the gas barrier layer 13 in Fig. 7) was bonded to one of the conversion treated surfaces using a two-component curing polyurethane adhesive by a dry lamination method, and then 50 µm thick polypropylene film (weight average molecular weight: 5,000,000) (equivalent to the toughness layer 15 in Fig. 7) was bonded to this nylon film in the same manner.

Next, a sheet of self-extinguishing layer composition was attached to the other conversion-treated side of the aluminum foil by the dry lamination method using a two-component curing polyurethane adhesive at a position that overlaps the battery element by design (roughly, a central portion of the aluminum foil) (corresponding to the self-extinguishing layer 14 in Fig. 7), and 30 µm thick polypropylene film (melting point: 110°C) having the same area as the aluminum foil (equivalent to the thermal adhesive layer 11 in Fig. 7) was further attached using a modified polyethylene adhesive to obtain an outer packaging film.

The resulting outer packaging film includes an empty space where the self-extinguishing layer 14 is not present at an edge portion of the outer packaging film, similar to the outer packaging film illustrated in Fig. 7.

(Preparation of Layered Battery Element)

A slurry for a negative electrode was prepared by mixing natural graphite (97 parts by mass) as a negative electrode active material, styrene-butadiene rubber (SBR) (2 parts by mass) as a binder, carboxymethyl cellulose (CMC) (1 part by mass) as a thickener, and water (100 parts by mass) as a solvent.

Next, a 10 µm thick copper foil was used as a negative electrode current collector, and the above-described slurry for negative electrode was coated on the negative electrode current collector in such a manner that the coating weight after drying was 9 mg/cm² on one side and 18 mg/cm² on both sides, and then dried to prepare a negative electrode.

This negative electrode was roll pressed to achieve a pressing density of 1.5 g/cm³.

NCM523 (or LiNi_{0.5}Co_{0.2}Mn_{0.3}O₂) (94 parts by mass) as a positive electrode active material, polyvinylidene fluoride (PVDF) (N-methyl-2-pyrrolidone (NMP) dispersion with a solid content of 8% by mass) (37.5 parts by mass) as a binder, acetylene black (3 parts by mass) as a conductive aid, and NMP (32.2 parts by mass) as a solvent were mixed to prepare a slurry for a positive electrode.

Next, a 20 µm thick aluminum foil was used as a positive electrode current collector, and the above-described slurry for positive electrode was applied to the positive electrode current collector in such a manner that the coating weight after drying was 16.0 mg/cm² on one side and 32.0 mg/cm² on both sides, and then dried to prepare a positive electrode.

This positive electrode was roll pressed to achieve a pressing density of 3.2 g/cm³.

The roll-pressed positive electrode is punched into a rectangle of 60 mm × 50 mm, and the roll-pressed negative electrode is punched into a rectangle of 62 mm × 52 mm.

Next, a slurry coating film on a 60 mm × 10 mm area at one end of the long side of the above-described punched positive electrode was peeled off, leaving a 60 mm × 40 mm slurry coating film, and a positive electrode terminal was attached to this peeled off area to obtain a positive electrode with a positive electrode terminal.

Similarly, a slurry coating film on a 62 mm × 10 mm area at one end of the long side of the above-described punched negative electrode was peeled off, leaving a 62 mm × 42 mm slurry coating film, and a negative electrode terminal was attached to this peeled off area to obtain a negative electrode with a negative electrode terminal.

The above-described positive electrode with a positive electrode terminal was prepared in 9 pieces, and the above-described negative electrode with a negative electrode terminal was prepared in 10 pieces.

The above-described negative electrode with a negative electrode terminal and the above-described positive electrode with a positive electrode terminal were alternately layered with a polyethylene separator (porosity: 50%) in between, to obtain a layered battery element composed of 10 negative electrodes with negative electrode terminals, 9 positive electrodes with positive electrode terminals, and 18 separators. The layered structure in the layered battery element was represented as "negative electrode with negative electrode terminal/separator/positive electrode with positive electrode terminal/separator/negative electrode with negative electrode terminal/separator.../negative electrode with negative electrode terminal" (the outermost layers on both sides were both negative electrodes with negative electrode terminals). The positive electrode terminal and the negative electrode terminal were placed on the same side of the layered battery element.

As described above, a layered battery element corresponding to the battery element 50 in Fig. 5 and Fig. 6 was obtained.

### (Preparation of Nonaqueous Electrolyte)

A mixture of ethylene carbonate (EC) (35% by volume), dimethyl carbonate (DMC) (35% by volume), and ethyl methyl carbonate (EMC) (30% by volume) was used as a solvent, and 1 mol/L of LiPF₆ was added to the mixture to prepare the nonaqueous electrolyte solution.

### (Preparation of Lithium-ion Battery)

The above-described outer packaging film was subjected to a drawing process as illustrated in Fig. 6 to form the battery housing portion (battery housing portion 10a in Fig. 6) and the bent portion (bent portion 10c in Fig. 6). This drawing process was performed in such a manner that the thermal adhesive layer (thermal adhesive layer 11 in Fig. 7) side of the outer packaging film was inside, and the toughness layer (toughness layer 15 in Fig. 7) was outside.

At this time, the battery housing portion corresponded to the portion of the outer packaging film where the self-extinguishing layer existed, and the bent portion corresponded to the empty space of the outer packaging film (or the portion where the self-extinguishing layer did not exist).

Two sheets of the above-described drawn outer packaging films were prepared.

Next, the above-described layered battery element corresponding to the battery element 50 was arranged in the battery housing portion of the two above-described drawn outer packaging films, the edge portions of the two outer packaging films were overlapped with each other (see Fig. 6), and the three sides of these outer packaging films were heat-sealed at 150°C to form a sealing portion. This resulted in an outer packaging that housed the layered battery element and whose one side was open. At this time, the sealing portion was made to correspond with the empty space in the outer packaging film (or the portion where the self-extinguishing layer did not exist). The layered battery elements were arranged in such a manner that the positive electrode terminal and the negative electrode terminal were pulled out from the open side of the outer packaging (see Fig. 5).

Next, the above-described nonaqueous electrolyte solution was injected into the outer packaging that was open on one side, and then the opening of the packaging was heat-sealed at 150°C to seal the packaging.

As described above, the lithium-ion battery of Example 101 was obtained.

### [Example 102]

The lithium-ion battery of Example 102 was prepared in the same manner as in Example 101, except that the self-extinguishing layer of the outer packaging film was replaced with a 100 µm thick polyphenylene sulfide resin film (manufactured by Toray Industries, Inc.: TORELINA: 100-3A30).

### [Example 103]

The lithium-ion battery of Example 103 was prepared in the same manner as in Example 101, except that the self-extinguishing layer of the outer packaging film was replaced with a polyolefin (polypropylene "E200GF" manufactured by Prime Polymer, Inc.) film (50 µm thick) to which a condensed phosphate ester fire extinguishing agent flame retardant (manufactured by ADEKA: ADK STAB: FP-600) was added.

### [Evaluation Test]

When the external appearance of the lithium-ion batteries of Examples 101 to 103 was observed, the outer packaging film was bent along the shape of the battery element and the electrode terminals, and the edge portions were completely bonded and sealed.

Furthermore, the bonded portion (sealing portion) was cut off and the outer packaging film was unfolded. Both the inner and outer surfaces of the packaging film were observed, and no cracks or the like were found, including the bent portion.

A positive electrode - negative electrode short-circuit test was conducted on the lithium-ion batteries of Examples 101 to 103 by penetrating an iron rod.

In Examples 101 and 102, only vapor was generated and no ignition occurred.

In Example 103, smoke was generated but no ignition was observed. The reason for this is thought to be that the chain reaction was stopped by radicals generated from the self-extinguishing layer, or that oxygen was blocked by the polyphenylene sulfide resin film.

The disclosure of Japanese Patent Application No. 2019-066264, filed on March 29, 2019, and Japanese Patent Application No. 2019-066265, filed on March 29, 2019, are hereby incorporated by reference in its entirety.

All Documents, Patent Applications, and technical standards described herein are incorporated by reference herein to the same extent as if each of the Documents, Patent Applications, and technical standards had been specifically and individually indicated to be incorporated by reference.

## Claims

1. An outer packaging film for a lithium-ion battery having a layered structure that includes a thermal adhesive layer, a metal layer, and a gas barrier layer, wherein the thermal adhesive layer, the metal layer, and the gas barrier layer are arranged in this order,
wherein the layered structure further includes a self-extinguishing layer.

2. The outer packaging film for a lithium-ion battery according to claim 1, wherein the self-extinguishing layer has at least one of: a function of trapping radicals involved in combustion, a function of blocking a combustion supporting material, or a function of absorbing heat and diluting a combustion supporting material.

3. The outer packaging film for a lithium-ion battery according to claim 1 or 2, wherein the self-extinguishing layer is arranged between the thermal adhesive layer and the metal layer.

4. The outer packaging film for a lithium-ion battery according to any one of claims 1 to 3, wherein the metal layer is composed of aluminum foil or stainless steel foil.

5. The outer packaging film for a lithium-ion battery according to any one of claims 1 to 4, wherein the layered structure further includes a toughness layer on a side opposite from a side on which the thermal adhesive layer is arranged, relative to the metal layer.

6. The outer packaging film for a lithium-ion battery according to claim 5, wherein the toughness layer contains ultrahigh molecular weight polypropylene.

7. The outer packaging film for a lithium-ion battery according to any one of claims 1 to 6, wherein a thickness of the self-extinguishing layer is from 20 to 1,000 µm.

8. The outer packaging film for a lithium-ion battery according to any one of claims 1 to 7, wherein a melting point of the thermal adhesive layer is from 100 to 170°C.

9. The outer packaging film for a lithium-ion battery according to any one of claims 1 to 8, wherein an empty space where the self-extinguishing layer is not present is provided at an edge portion of the outer packaging film for a lithium-ion battery.

10. The outer packaging film for a lithium-ion battery according to claim 9, wherein the empty space includes a bonded portion.

11. The outer packaging film for a lithium-ion battery according to claim 9 or 10, wherein the empty space includes a bent portion.

12. A lithium-ion battery comprising the outer packaging film for a lithium-ion battery according to any one of claims 1 to 11.

13. The lithium-ion battery according to claim 12, comprising:
an outer packaging including a battery housing portion and a sealing portion;
a lithium-ion battery element including a positive electrode, a negative electrode, and a separator, housed in the battery housing portion; and
an electrolyte solution or an electrolyte housed in the battery housing portion,
wherein the outer packaging includes the outer packaging film for a lithium-ion battery.

14. The lithium-ion battery according to claim 13, wherein the thermal adhesive layer in the outer packaging film for a lithium-ion battery forms an inner wall of the battery housing portion.

15. A lithium-ion battery stack comprising the lithium-ion battery according to any one of claims 12 to 14.
